# EUROPEAN PATENT APPLICATION

(11) **EP 4 056 343 A1**
(43) Date of publication of application: **14.09.2022**
(21) Application number: 20902687.1
(22) Date of filing: 09.12.2020
(51) Int. Cl.: B29B 17/04, B29C 31/10, B29B 7/90, B29B 7/92

(54) **METHOD FOR PRODUCING SYNTHETIC RESIN MOLDED ARTICLE IN WHICH MARINE FLOATING PLASTIC WASTE IS USED**

(30) Priority: 16.12.2019 JP 2019226085
(71) Applicant: Technique Co., Ltd., Tokyo, 157-0061 (JP)
(72) Inventor: KAMITE Masayuki, Tokyo 157-0061 (JP)
(74) Representative: Prüfer & Partner mbB Patentanwälte · Rechtsanwälte
(86) International application number: PCT/JP2020/045822
(87) International publication number: WO 2021/125009

(57) **Abstract**

The present invention provides a method for manufacturing a synthetic resin molded product which does not require classification of recovered ocean floating plastic trash according to kind of plastic, and can reuse most thereof as a raw material. The method is characterized by including mixing ocean floating plastic trash P (30 to 80 wt%) having a diameter or a side of 5 mm or less or a weight of 0.1 g or less, and a woodchip W (second material) (20 to 70 wt%) having a diameter or a side of 5 mm or less, and not molten under a temperature condition of 200°C by a mixer 3, supplying a mixture of the ocean floating plastic trash P and the woodchip W to a grinding device 4, grinding the mixture into a powder with a diameter or a side of 1 mm or less, supplying the resulting powder as a raw material for a synthetic resin molded product to a molding machine, and carrying out a molding step.

## Description

### TECHNICAL FIELD

The present invention relates to a method for reusing recovered ocean floating plastic trash as a raw material for a new synthetic resin molded product.

### BACKGROUND ART

Currently, there is a concern that marine pollution due to a large amount of drifting plastic trash is becoming more serious. Thus, it is a pressing issue worldwide to establish a method of effective disposal of ocean floating plastic trash. For example, when the recovered ocean floating plastic trash can be reused as the raw material for a new synthetic resin molded product (material recycled, remade into new products), marine pollution can be reduced, effective utilization of exhaustible resources can be achieved, and the adverse effects on the natural environment can be reduced.

However, ocean floating plastic trash is recovered with a large number of kinds of plastics mixed therein. Whereas, plastics vary in physical properties (such as softening melting temperature) according to the kind, and hence are very difficult to use for material recycling with a large number of kinds of plastics mixed therein.
Patent Document 1: JP 6408896 B
Patent Document 2: JP 2005-66515 A
Patent Document 3: JP S62-297112 A

### SUMMARY OF INVENTION

### Technical Problem

When the recovered ocean floating plastic trash can be classified according to the kind, the possibility of being able to use these for material recycling increases. However, with the current technology, it is very difficult to classify all the recovered ocean floating plastic trash according to the kind. Accordingly, most plastics except for some kinds of plastics easy to classify or sort undesirably cannot be used for material recycling.

Specifically, for example, a PET resin, or the like of the plastics included in the recovered ocean floating plastic trash is relatively easy to sort from the state in which a large number of kinds of plastics are mixed. Actually, an attempt has been made to reuse the PET bottles sorted from among ocean floating plastic trash as the raw materials for a new molded product made of a PET resin. However, the number of kinds of plastics which can be easily sorted from the state in which a large number of kinds of plastics are mixed is very small. Most plastics cannot be used for material recycling with the current technology.

Incidentally, the recovered ocean floating plastic trash may be used as a part of the product raw material with a large number of kinds of plastics mixed therein without classification according to the kind. This is, however, used just by being mixed with concrete for manufacturing a block, or by being mixed with asphalt or stone for use as a road material. This is only confining of the ocean floating plastic trash in another product, which is actually far from material recycling.

The present invention is for solving such problems of the prior art. It is an object of the present invention to provide a method for manufacturing a synthetic resin molded product which does not require classification of the recovered ocean floating plastic trash according to the kind of plastic, and can reuse most thereof as the raw material.

### Solution to Problem

A method for manufacturing a synthetic resin molded product using ocean floating plastic trash in accordance with the present invention is characterized by including, mixing 30 to 80 wt% of ocean floating plastic trash including a plurality of kinds of plastics each having a diameter or a side of 5 mm or less or a weight of 0.1 g or less mixed therein, and 20 to 70 wt% of a second material having a diameter or a side of 5 mm or less, and not molten under a temperature condition of 200°C by a mixer, supplying a mixture of the ocean floating plastic trash and the second material to a grinding device, and grinding the mixture into a powder with a diameter or a side of 1 mm or less, and supplying the resulting powder as a raw material for a synthetic resin molded product to a molding machine, and carrying out a molding step.

Incidentally, preferably, using a device including a rotor rotating at a speed as high as 1500 rpm or more as the grinding device, the mixture of the ocean floating plastic trash and the second material is ground. Further, preferably, a woodchip, a bamboo chip, a ground product of a shell, or chaff of grain is used as the second material.

Ocean floating plastic trash with a diameter or a side of 5 mm or less or a weight of 0.1 g or less can be obtained by being sorted from the recovered ocean floating trash without classification according to the kind of plastic, followed by crushing. Incidentally, preferably, after sorting and before crushing, if required, a drying step is carried out to make the moisture content of the ocean floating plastic trash 7% or less.

Further, the second material (the one not molten under a temperature condition of 200°C) to be mixed with the ocean floating plastic trash can also be obtained by being sorted from the recovered ocean floating trash, and being crushed. Also in this case, preferably, after sorting and before crushing, if required, a drying step is carried out to make each moisture content of the ocean floating plastic trash and the second material 7% or less, followed by crushing.

### Advantageous Effects of Invention

With the method for manufacturing a synthetic resin molded product using ocean floating plastic trash in accordance with the present invention, the recovered ocean floating plastic trash is not required to be classified according to the kind of plastic, and most thereof can be reused as the raw material for a synthetic resin molded product. For this reason, marine pollution can be reduced, and exhaustible resources can be used more effectively, and environmental load can be reduced. Further, it is possible to establish an effective disposal method of ocean floating plastic trash, which can largely contribute to preservation of global environment.

### BRIEF DESCRIPTION OF DRAWINGS

Fig. 1 is an explanatory view of a method for manufacturing a synthetic resin molded product in accordance with First Embodiment of the present invention.
Fig. 2 is a view showing a configuration example of a grinding device 4 usable in the method for manufacturing a synthetic resin molded product in accordance with First Embodiment of the present invention.
Fig. 3 is a view showing another configuration example of the grinding device 4 usable in the method for manufacturing a synthetic resin molded product in accordance with First Embodiment of the present invention.

### DESCRIPTION OF EMBODIMENTS

A "method for manufacturing a synthetic resin molded product using ocean floating plastic trash" in accordance with the present invention is characterized by using recovered ocean floating plastic trash as a first raw material, and adding a second raw material (which will be hereinafter referred to as a "second material") thereto, and mixing them, and grinding them, and charging them into a molding machine, thereby manufacturing a synthetic resin molded product. Below, embodiments (First to Third Embodiments) of the present invention will be specifically described.

### - First Embodiment

In the present embodiment, after recovering ocean floating plastic trash, the steps of drying, crushing, mixing with the second material, grinding, and molding are carried out.

### 1. Recovering step

The ocean floating trash floating at the surface of the sea or below the surface of the sea is recovered by a fishing net, or the like. When those except for plastics (e.g., the living body or dead body of an organism, seaweeds, driftwood, and wood trash) are included in the recovered ocean floating trash, ocean floating plastic trash is sorted from among the ocean floating trash. Incidentally, large-size trash such as a fishing net, a buoy, and a part of a hull made of FRP can be excluded from the ocean floating plastic trash to be sorted.

The sorted ocean floating plastic trash generally includes various plastics (e.g., polyethylene (PE), polypropylene (PP), polystyrene (PS), polyvinyl chloride (PVC), polyethylene terephthalate (PET), polyamide (PA), urethane (URE), polycarbonate (PC), and ABS) mixed therein. However, in the present embodiment, these are not required to be classified according to the kind, and can be transferred to the next step with a large number of kinds of plastics mixed therein. Incidentally, the sorted ocean floating plastic trash may include other substances than plastic (e.g., aluminum laminated on a plastic film, papers, fibers, and other foreign matters) mixed therein. However, the mixing amount of the other substances than plastic is preferably 10 wt% or less based on the total amount of the sorted ocean floating plastic trash.

### 2. Drying step

The sorted ocean floating plastic trash is subjected to a drying step to make the moisture content 7% or less (preferably 5% or less). Although the drying step can be carried out using a dryer utilizing various heat sources, the ocean floating plastic trash may be dried by simple exposure to sunlight or wind.

### 3. Crushing step

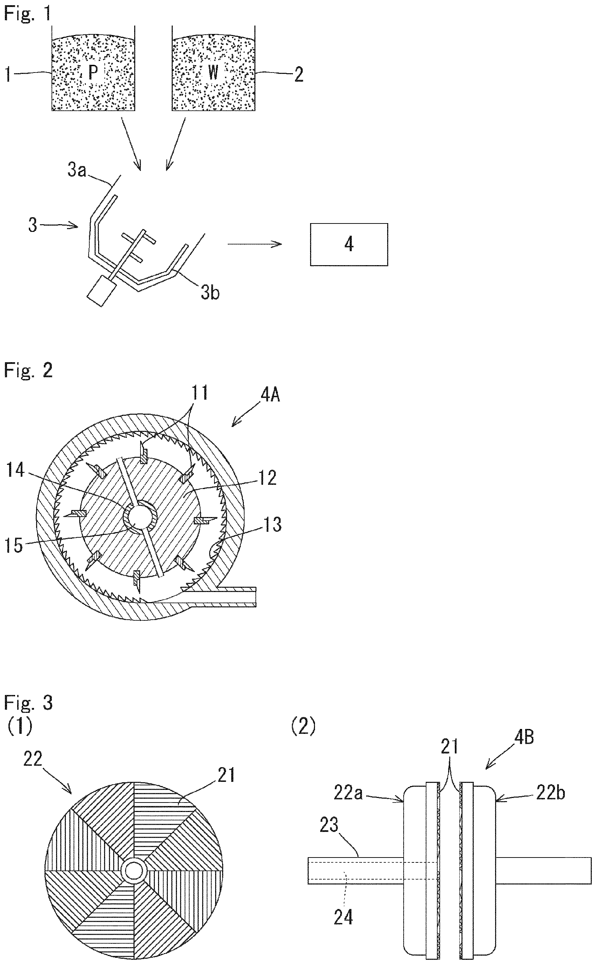

The ocean floating plastic trash is crushed so as to result in a fragment with a size of a diameter or a side of 5 mm or less, or a weight of 0.1 g or less. The crushing step can be carried out using a crusher, or the like. The crushed ocean floating plastic trash P is accommodated in a first tank 1 shown in Fig. 1. Incidentally, the crushed ocean floating plastic trash P may include the one got into a lint shape. Further, the plastic trash (e.g., large size trash such as a buoy, a fishing net, or a part of a hull made of FRP) which is difficult to crush by a crusher can be appropriately removed.

### 4. Mixing step

The crushed ocean floating plastic trash P is mixed with the second material. As the second material, the material not molten under a temperature condition of 200°C is used. Incidentally, when the prepared second material includes the one having a size of a diameter or a side of more than 5 mm therein, the second material is crushed using a crusher or the like so that the diameter or one side may become 5 mm or less before mixing.

In the present embodiment, a woodchip W is used as the second material. The woodchip W is accommodated in a second tank 2 shown in Fig. 1. The term "woodchip" herein referred to means a fragment of wood such as a natural wood, a laminated wood, a MDF, or a plywood or a wood flour thereof, and includes sawdust and shavings generated in association with working of wood at a lumber mill, a manufacturing plant of a woodwork product, or the like, and the discarded wood, lumber remnants thereof, or those obtained by crushing wood products (such as wooden furniture and wooden construction material). The woodchip W can also be obtained by crushing the driftwood and wood trash included in the recovered ocean floating trash.

Incidentally, the woodchip W may include foreign matters such as papers, fibers, laminate sheets, or paints mixed therein. However, the mixing amount of the foreign matters is preferably 20 wt% or less based on the total amount of the woodchip W. Further, in place of the woodchip W, a crushed product or a ground product of carbon fiber or glass fiber for use in FRP, a ground product of a shell, a bamboo chip, and chaff of grain) can also be used as the second material.

The ocean floating plastic trash P accommodated in the first tank 1, and the woodchip W accommodated in the second tank 2 are respectively transported by a transport device (not shown), and are charged into a mixer, and are mixed. In the present embodiment, the specific configuration of the mixer has no restriction. For example, as shown in Fig. 1, a mixer 3 configured such that a stirring impeller 3b rotates at a low speed (e.g., 600 rpm or more) in a bowl 3a, and capable of stirring and mixing the charged object to be processed in the bowl 3a is used.

Although the mixing ratios of the ocean floating plastic trash P and the woodchip W are preferably set as the equal amounts (50 wt% for each), the mixing ratios can be appropriately increased or decreased according to the conditions (set at 30 to 80 wt% for the ocean floating plastic trash P and 20 to 70 wt% for the woodchip W).

Further, the ocean floating plastic trash P and the woodchip W have been equalized in terms of the size (the upper limit size) at the time point when the plastic trash P and the woodchip W are mixed, respectively. However, it may be difficult to uniformly mix them entirely with short-time stirring due to the reason that the plastic trash P and the woodchip W are different from each other in specific gravity and shape, and other reasons. In such a case, stirring is preferably performed long enough. The soft plastic (particularly, a film-shaped plastic) in the ocean floating plastic trash P, a low melting point plastic, etc. are slightly softened by heating of a stirred tank and the frictional heat resulting from the stirring, and are compatible with the woodchip W. Accordingly, the entire mixture can be uniformly mixed. However, the entire mixture may be able to be uniformly mixed with short-time (e.g., 1-minute) stirring. Therefore, the stirring time can be appropriately determined while confirming how mixing is performed.

### 5. Grinding step

When the ocean floating plastic trash P and the woodchip W are sufficiently mixed with each other, the mixture thereof is discharged from a mixer 3, and is quantitatively supplied to a grinding device 4, and is ground. In the present embodiment, the specific configuration of the grinding device 4 has no restriction. In the case where the ocean floating plastic trash P and the woodchip W having a size of a diameter or a side of about 5 mm, or a weight of about 0.1 g are introduced, the grinding device 4 is used which can grind into a fine powder with a diameter or a side of 1 mm or less.

For example, as shown in Fig. 2, an impact type pulverizing mill 4A having a rotor 12 including a plurality of rotary blades 11 (or a plurality of hammers) mounted at the outer circumferential part thereof, and a file-shaped fixed blade 13 arranged so as to surround the radial outside of the rotary orbit of the rotary blade 11, and capable of pulverizing the object to be processed introduced through a supply route 15 formed in the inside of the rotating shaft 14 with a strong impact action by the rotary blade 11 and the fixed blade 13 by rotating the rotor 12 at a high speed can be used as the grinding device 4.

Alternatively, a pulverizing mill 4B having a rotor 22 including a file-shaped concave-convex surface 21 formed thereon as shown in Fig. 3(1), and including two rotors 22a and 22b arranged with a prescribed interval therebetween so that the concave-convex surfaces 21 are opposed to each other as shown in Fig. 3(2), and configured such that an object to be processed is supplied to the region between the rotors 22a and 22b through a supply route 24 formed in the inside of the rotating shaft 23 with the rotors 22a and 22b rotated at a high speed in the opposite directions, respectively, and is collided with the concave-convex surfaces 21, thereby to be able to be pulverized can be used as the grinding device 4.

Incidentally, in order to pulverize an object to be processed with a size of a diameter or a side of about 5 mm, or a weight of about 0.1 g into a diameter or a side of 1 mm or less by the grinding device 4 with efficiency and for a short time, it becomes necessary to rotate the rotor of the grinding device 4 (e.g., the rotor 12 shown in Fig. 2, or the rotors 22, 22a, and 22b shown in Fig. 3) at a high speed (e.g., 1500 rpm or more). Then, when the object to be processed is supplied to the grinding device 4 with the rotor rotating at a high speed, the friction between the objects to be processed and between the object to be processed and the element in the grinding device 4 generates heat. When such a grinding step is continuously carried out, the temperatures of the inside of the grinding device 4, and the object to be processed may become high (e.g., 80°C or more).

In the present embodiment, the ocean floating plastic trash P is charged into a grinding device 4, and is ground. The ocean floating plastic trash P includes a plurality of kinds of plastics mixed therein. For this reason, the ocean floating plastic trash P may include therein low melting point plastic sheets and films, plastics including low melting point additives added during plastic manufacturing, or the like. In this case, there is a fear that, when the temperature of the inside of the grinding device 4 increases to about 80°C, those are softened, and are attached, and deposited on the elements in the grinding device 4 (e.g., the rotary blade 11, and the fixed blade 13 shown in Fig. 2, or the concave-convex surface 21 of the rotor 22 shown in Fig. 3), resulting in the reduction of the grinding efficiency, or resulting in an ungrindable state.

Incidentally, although some grinding devices 4 are equipped with a cooling device, it is difficult to cool the rotors 12 and 22 and the tip of the rotary blade 11 rotating at a high speed. For this reason, when the ocean floating plastic trash P including low-melting-point plastics therein is supplied to the grinding device 4, and the grinding step is continuously carried out, the plastics are still attached and deposited, resulting in problems such as the reduction of the grinding efficiency and an ungrindable state.

Further, the impact type pulverizing mill 4A shown in Fig. 2 is configured such that the particle size of the ground product can be adjusted by adjusting the gap dimension between the rotary blade 11 and the fixed blade 13 (the particle size of the ground product can be made smaller by setting the gap dimension smaller). In the case where the ocean floating plastic trash P includes a plastic film with a thickness of about 100 µm therein, even when the gap dimension between the rotary blade 11 and the fixed blade 13 is set as small as possible, a very thin plastic film may slip through the gap therebetween. In this case, grinding into a diameter or a side of 1 mm or less cannot be performed.

However, in the present embodiment, only the ocean floating plastic trash P is not supplied to the grinding device 4, but the mixture of the ocean floating plastic trash P and the woodchip W is supplied to the grinding device 4, and the grinding step is carried out. For this reason, the foregoing problems can be preferably avoided.

Specifically, in the case where the mixture of the ocean floating plastic trash P and the woodchip W is supplied to the grinding device 4, and the grinding step is carried out, even when the temperature of the grinding device 4 increases due to the frictional heat, the increase in temperature can be suppressed by the evaporation of the residual moisture included in the mixture, or the like, and the residual moisture can be minimized. Whereas, even when the plastics are partially softened, and are momentarily attached on the element in the grinding device 4, the woodchip W scrubs them (i.e., the woodchip W collides with the attached plastics, and physically rips off them). As a result, even when the grinding step is continuously carried out, it is possible to preferably avoid the attachment and deposition of the plastics onto the rotors and the like of the grinding device 4.

Further, the ocean floating plastic trash P is stirred while being mixed with the woodchip W in the grinding device 4. For this reason, even when a very thin plastic film is included in the ocean floating plastic trash P, it is possible to preferably avoid the film from slipping through the gap between the rotary blade 11 and the fixed blade 13 alone.

Incidentally, when the mixing ratio of the woodchip W is less than 20 wt% (the mixing ratio of the ocean floating plastic trash P is 80 wt% or more), the plastic attachment preventive effect and the slipping preventive effect as described above may be reduced. For this reason, the mixing ratio of the woodchip W is preferably set at 20 wt% or more. Whereas, in the case where the mixing ratio of the ocean floating plastic trash P is less than 30 wt% (the mixing ratio of the woodchip W is 70 wt% or more), when the ground product is used as the raw material for a synthetic resin molded product, the plastic component may not be able to be allowed to favorably function as a binder (defective molding may be caused). For this reason, the mixing ratio of the ocean floating plastic trash P is preferably set at 30 wt% or more.

As described above, conventionally, most plastics included in the recovered ocean floating plastic trash cannot be used for material recycling, and have been currently mainly used for thermal recycling (such as heat energy recovery by burning or conversion to RPF). When the ocean floating plastic trash can be ground to a powder with a diameter or a side of 1 mm or less, there is a possibility that these can be used for material recycle (i.e., can be used as the raw materials for new plastic products).

However, the ocean floating plastic trash includes a plurality of kinds of plastics mixed therein. For this reason, when these are tried to be ground by a conventional grinding device 4, or grinding method, the plastics are partially attached and deposited on the rotors of the grinding device 4, and the like. This entails a necessity of intermittently carrying out the step of removing the attached plastics. Accordingly, the grinding step cannot be carried out continuously. Further, slipping of the plastic film is caused, which undesirably makes impossible grinding into a fine powder with a diameter or a side of 1 mm or less.

In contrast, in the present embodiment, the ocean floating plastic trash P including a plurality of kinds of plastics mixed therein is mixed with the woodchip W, and these are fed to the grinding device 4, thereby carrying out the grinding step. As a result, such a problem can be preferably avoided, and grinding into a powder with a diameter or a side of 1 mm or less can be performed.

By rotating the rotor of the grinding device 4 at a high speed, even in the case where the temperature of the inside of the grinding device 4 increases, when the second material (woodchip W) to be mixed with the ocean floating plastic trash P has a heat resistance of about 200°C, it is possible to prevent the attachment and the deposition of plastics in the inside of the grinding device 4 without a problem.

### 6. Molding step

The powder obtained by grinding the mixture of the ocean floating plastic trash P and the woodchip W is fed as the raw material for a synthetic resin molded product to an extrusion molding machine to carry out a molding step. At this step, a pigment and other additives can be added to the raw material, if required.

When the heating temperature of the extrusion molding machine is set at a proper value (e.g., 150 to 200°C), and the molding step is carried out, the raw material (and the additives) is heated in the molding machine, and the raw material containing molten plastic powder is extruded from a die, and is cooled and molded. In the present embodiment, as the second material to be mixed with the ocean floating plastic trash P, a material (woodchip W) not molten under a temperature condition of 200°C is used. For this reason, the powder (wood flour) functions as a filler while being dispersed in the inside of the plastic functioning as a binder, which can stabilize the shape of the molded product.

Incidentally, when the ocean floating plastic trash P and the woodchip W serving as the raw materials are mixed without being ground into a powder with a diameter or a side of 1 mm or less (i.e., with a diameter or a side of more than 1 mm, and with uneven sizes), and are supplied to an extrusion molding machine, and the molding step is carried out, the fragment in the ocean floating plastic trash P not molten at the heating temperature (about 200°C) or less in the extrusion molding machine may appear with a size of more than 1 mm on the surface layer of the molded product. In this case, undesirably, direct contact with the hand, foot, or the like of a user is dangerous, and the sense of beauty of the molded product is impaired. However, with the method in accordance with the present embodiment, such a problem can be preferably avoided.

Further, in the present embodiment, as the molding machine for carrying out the molding step, an extrusion molding machine is used. However, the molding step can also be carried out using another molding machine (such as an injection molding machine, a press molding machine, or a casting molding machine).

### - Second Embodiment

In First Embodiment, only the ocean floating plastic trash is sorted from the recovered ocean floating trash. In the present embodiment, when the recovered ocean floating trash includes those usable as the second material (those not molten under a temperature condition of 200°C) such as driftwood and wood trash, these are sorted from the ocean floating trash, and are used as the second material.

In other words, the ocean floating plastic trash is sorted from the recovered ocean floating trash, and the second materials (such as driftwood and wood trash) are individually sorted. Then, these are dried to make each moisture content 7% or less (preferably 5% or less). Then, these are crushed to a fragment having a size of a diameter or a side of 5 mm or less, or a weight of 0.1 g or less. The subsequent steps (a mixing step, a grinding step, and a molding step) are the same as those in First Embodiment.

### -Third Embodiment

In the present embodiment, ocean floating plastic trash and the second materials (such as driftwood and wood trash) are not individually sorted from the recovered ocean floating trash, but the ocean floating trash is divided into a group including ocean floating plastic trash and the second material, and a group other than this. The ocean floating plastic trash and the second material are charged into a crusher with these mixed therein, thereby carrying out the crushing step. Then, the crushed product of the ocean floating plastic trash and the second material is sufficiently mixed by a mixer. Subsequently, the grinding step and the molding step are carried out sequentially.

Incidentally, before the crushing step, preferably, whether or not the ratios (weight ratios) of the ocean floating plastic trash and the second material are tilted too much toward any one side is confirmed, and if required, are appropriately adjusted. Specifically, the amounts of the ocean floating plastic trash and the second material are visually compared. When the amounts are observed to be substantially equal, these are charged into a crusher to carry out the crushing step. When any one is too larger than the other, or when too smaller, any one or both of the amounts are increased or decreased, thereby to be adjusted to substantially equal amounts. Subsequently, the grinding step is carried out. Even in the case where both the ratios are not actually "equal", when the ocean floating plastic trash is in an amount within the range of 30 to 80 wt%, and the second material is in an amount within the range of 20 to 70 wt%, the grinding step and the molding step can be carried out without a problem.

### REFERENCE SIGNS LIST

- 1: First tank
- 2: Second tank
- 3: Mixer
- 3a: Bowl
- 3b: Stirring impeller
- 4: Grinding device
- 4A: Impact type pulverizing mill
- 4B: Pulverizing mill
- 11: Rotary blade
- 12: Rotor
- 13: Fixed blade
- 14: Rotating shaft
- 15: Supply route
- 21: Concave-convex surface
- 22, 22a, 22b: Rotor
- 23: Rotating shaft
- 24: Supply route

## Claims

1. A method for manufacturing a synthetic resin molded product using ocean floating plastic trash, the method comprising:
mixing 30 to 80 wt% of ocean floating plastic trash including a plurality of kinds of plastics each having a diameter or a side of 5 mm or less or a weight of 0.1 g or less mixed therein, and 20 to 70 wt% of a second material having a diameter or a side of 5 mm or less, and not molten under a temperature condition of 200°C by a mixer;
supplying a mixture of the ocean floating plastic trash and the second material to a grinding device, and grinding the mixture into a powder with a diameter or a side of 1 mm or less; and
supplying the resulting powder as a raw material for a synthetic resin molded product to a molding machine, and carrying out a molding step.

2. The method for manufacturing a synthetic resin molded product using ocean floating plastic trash according to claim 1, wherein the mixture of the ocean floating plastic trash and the second material is ground using a device including a rotor rotating at a speed as high as 1500 rpm or more as the grinding device.

3. The method for manufacturing a synthetic resin molded product using ocean floating plastic trash according to claim 1, wherein a woodchip, a bamboo chip, a ground product of a shell, or chaff of grain is used as the second material.

4. The method for manufacturing a synthetic resin molded product using ocean floating plastic trash according to claim 1,
wherein the ocean floating plastic trash is sorted from the recovered ocean floating trash without classification according to kind of plastic; and
the sorted ocean floating plastic trash including a plurality of kinds of plastics mixed therein is crushed to a diameter or a side of 5 mm or less, or a weight of 0.1 g or less, and subsequently, is mixed with the second material with a diameter or a side of 5 mm or less, and not molten under a temperature condition of 200°C.

5. The method for manufacturing a synthetic resin molded product using ocean floating plastic trash according to claim 1,
wherein the sorted ocean floating plastic trash is subjected to a drying step to make a moisture content thereof 7% or less, followed by crushing.

6. The method for manufacturing a synthetic resin molded product using ocean floating plastic trash according to claim 1,
wherein the ocean floating plastic trash is sorted from the recovered ocean floating trash without classification according to kind of plastic, and the second material not molten under a temperature condition of 200°C is sorted from the recovered ocean floating trash; and
the sorted ocean floating plastic trash including a plurality of kinds of plastics mixed therein, and the sorted second material are crushed to a diameter or a side of 5 mm or less, or a weight of 0.1 g or less, respectively, followed by mixing thereof.

7. A method for manufacturing a synthetic resin molded product using ocean floating plastic trash, the method comprising:
dividing recovered ocean floating trash into a group including ocean floating plastic trash, and a second material not molten under a temperature condition of 200°C, and a group other than this, thereby sorting the ocean floating plastic trash including a plurality of kinds of plastics mixed therein and the second material from the recovered ocean floating trash;
crushing the sorted ocean floating plastic trash and second material to a diameter or a side of 5 mm or less, or a weight of 0.1 g or less;
mixing crushed products of the ocean floating plastic trash and the second material by a mixer;
supplying a mixture of the ocean floating plastic trash and the second material to a grinding device, and grinding the mixture into a powder with a diameter or a side of 1 mm or less; and
supplying the resulting powder as a raw material for a synthetic resin molded product to a molding machine, and carrying out a molding step.

8. The method for manufacturing a synthetic resin molded product using ocean floating plastic trash according to claim 7, wherein before crushing the sorted ocean floating plastic trash and second material, ratios thereof are adjusted such that the ocean floating plastic trash is in an amount within the range of 30 to 80 wt%, and the second material is in an amount within the range of 20 to 70 wt%.

9. The method for manufacturing a synthetic resin molded product using ocean floating plastic trash according to claim 6 or claim 7, wherein the sorted ocean floating plastic trash and second material are subjected to a drying step to make moisture contents thereof 7% or less, followed by crushing.
